**Europäisches Patentamt**

**European Patent Office**

**Office européen des brevets**

(19)

(11) Veröffentlichungsnummer: **0 238 933**
**B1**

(12) # EUROPÄISCHE PATENTSCHRIFT

(45) Veröffentlichungstag der Patentschrift:
**18.10.89**

(51) Int. Cl.⁴: **H 02 K 3/50**

(21) Anmeldenummer: **87103455.9**

(22) Anmeldetag: **10.03.87**

(54) Wickelkopfabstützung für elektrische Maschinen.

(30) Priorität: **26.03.86 DE 3610265**

(43) Veröffentlichungstag der Anmeldung:
**30.09.87 Patentblatt 87/40**

(45) Bekanntmachung des Hinweises auf die Patenterteilung:
**18.10.89 Patentblatt 89/42**

(84) Benannte Vertragsstaaten:
**AT DE FR NL SE**

(56) Entgegenhaltungen:
**DD-A- 87 614**
**DE-A- 2 606 484**
**DE-A- 2 711 285**
**DE-C- 1 286 198**
**US-A- 4 496 870**

(73) Patentinhaber: **Asea Brown Boveri Aktiengesellschaft,
Kallstadter Strasse 1, D-6800 Mannheim-Käfertal (DE)**

(72) Erfinder: **Jäger, Kurt, Dipl.-Ing. (FH), Stralsunder Weg 17,
D-6800 Mannheim 31 (DE)**
Erfinder: **Ehrt, Peter, Dipl.-Ing., Felsbergstrasse 5,
D-6141 Einhausen (DE)**

(74) Vertreter: **Rupprecht, Klaus, Dipl.-Ing. et al, c/o BBC
Brown Boveri Aktiengesellschaft ZPT
Postfach 100351 Kallstadter Strasse 1,
D-6800 Mannheim 1 (DE)**

ACTORUM AG

**Beschreibung**

Die Erfindung betrifft eine Anordnung zur Wickelkopfabstützung der Ständerwicklung einer elektrischen Maschine, insbesondere Turbogenerator großer axialer Länge, mit einem durch Preßplatten zusammengehaltenen Blechpaket und mit Leiterstäben, die im Wickelkopfbereich sich an einem Abstützring abstützt, der axial unmittelbar an die Preßplatte anschließt.

Die Statorwickelköpfe elektrischer Synchronmaschinen bedürfen einer Abstützung, um hohen Kräften, die insbesondere bei Kurzschlüssen auftreten können, standzuhalten. Bei der Ausbildung der Abstützung ist zu berücksichtigen, daß die Wicklungsteile sich in axialer Richtung der Maschine in der Weise frei bewegen können, daß sie Wärmeausdehnungen unbehindert folgen können.

Derartige Anordnungen sind aus der DE-A-2 606 484 und der DE-C-1 286 198 bekanntgeworden. Dort sind zur Abstützung der Stirnverbindungen Abstützwinkel und Stützringe vorgesehen. Um eine freie axiale Verschiebung der Wickelköpfe zu ermöglichen, sind z.B. bei der DE-C-1 286 198 zwischen dem Stützring und dem Maschinengehäuse Rollkörper angeordnet. Diese Wickelkopfabstützung erfordert immer noch einen relativ großen Konstruktions- und Montageaufwand. Insbesondere ist die Zugänglichkeit bei der Herstellung der Bandagierarbeiten eingeschränkt.

Man ist daher dazu übergegangen, die Abstützwinkel über Befestigungselemente an der Preßplatte des Blechkörpers zu verschrauben. Die Abstützwinkel sind dabei durch imprägnierte Glasgarnkordeln mit dem Statorwickelkopf starr verbunden und bilden eine Einheit. Sie stützen sich an der Preßplatte ab. In dem Aufsatz von Otto Fluhr et al «Luftgekühlte Turbogeneratoren für 18 … 130 MVA, Typen WX und WY» in Brown, Boveri Mitt. 6-1976, Seiten 392 bis 398 ist in Bild 2 eine Wickelkopfabstützung dargestellt, bei der jeder Abstützwinkel mit zwei als Übergangsstücke dienenden L-förmigen Winkeln an der Preßplatte verschraubt ist. Die Verschraubungen sind in axialer Richtung elastisch ausgebildet, damit sich die Statorwicklung gegenüber dem Blechkörper dehnen kann. Eine derartige Wickelkopfabstützung erfordert somit eine Vielzahl von elastisch ausgebildeten Verschraubungen mit relativ hohem Fertigungs- und Montageaufwand.

Aus der DE-A-2 711 285 ist schließlich bekanntgeworden, die Wickelköpfe mit einem konischen Ring aus Isolierstoff zu umgeben, der sich an einer zylindrischen Konsole abstützt, die mit der Preßplatte verbunden ist, um so die Kräfte aufzunehmen. Diese Ausgestaltung erfordert zwar keinen übermäßigen Montageaufwand, doch ist die Zugänglichkeit der Leiterstäbe im Wickelkopfbereich für die Bandagierarbeiten verhindert.

Ausgehend von der DE-A-2 711 285 ist es daher Aufgabe der Erfindung eine Anordnung zur Wickelkopfabstützung der eingangs genannten Art anzugeben, die konstruktiv einfach gestaltet ist, kostengünstig herstellbar und montierbar ist und ausreichende Zugänglichkeit zu den Wickelkopfbereichen gewährleistet.

Die Lösung der Aufgabe ist erfindungsgemäß dadurch gekennzeichnet, daß zwischen den Leiterstäben und dem Abstützring Abstützwinkel angeordnet sind mit zwischen sich angeordneten ringsegmentförmigen Distanzierungsstücken, die eine tangentiale Auslenkung der Abstützwinkel verhindern, daß der Abstützring, die Abstützwinkel und die Distanzierungsstücke jeweils miteinander verbunden sind und so eine bauliche mechanische Einheit bilden, die mit dem Wickelkopf starr verbunden ist, und daß die Preßplatten radial verlaufende Nuten aufweisen, in die die Abstützwinkel teilweise hineinragen und durch die letztere geführt sind.

Gegenüber den bekannten Wickelkopfabstützungen hat die erfindungsgemäße Anordnung die Vorteile, daß sie mit wenigen, einfach herstellbaren Teilen auskommt. So sind neben den obenhin erforderlichen Abstützwinkeln lediglich ein einfach herzustellender Abstützring und einfache Distanzierungsstücke erforderlich. Eine radiale Abstützung des Wickelkopfes am Maschinengehäuse ist entbehrlich. Die Wicklungsteile sind gut zugänglich, so daß die Bandagierarbeiten nicht behindert werden. Ferner kann auf Befestigungselemente wie Schrauben, Bolzen usw. zur Befestigung der Abstützwinkel vollständig verzichtet werden. Die erfindungsgemäße Wickelkopfabstützung kann billiger und mit weniger Teilen als bisher hergestellt werden und vermeidet die Gefahr sich lösender Befestigungsteile.

Vorzugsweise weist die Preßplatte eine konzentrisch zur Maschinenachse verlaufende Ringnut auf, in die die Distanzierungsstücke wenigstens teilweise hineinragen. Hierdurch ergibt sich eine Zentrierung des Wickelkopfes. Um die tangentiale Festlegung der Abstützwinkel in ihrem radial äußeren Bereich zu gewährleisten, kann in vorteilhafter Weise zwischen zwei benachbarten Abstützwinkeln jeweils ein segmentförmiges Distanzierstück angeordnet werden. Je ein Ende des Distanzierungsstückes liegt dabei an einem der beiden Abstützwinkel an. Bei dieser Lösung ist der gesamte Innendurchmesser des Abstützringes entweder durch Teile des Abstützwinkels oder durch Distanzierungsstücke belegt.

Bei der gesamten Belegung des Innenumfanges des Abstützringes durch Abstützwinkel und Distanzierungsstücke können Teilungsfehler bei der Herstellung der Bauteile zu Problemen führen. Eine vorteilhafte Weiterbildung der Erfindung schlägt daher vor, daß ein segmentförmiges Distanzierungsstück an seiner zur Maschinenachse gerichteten Fläche eine axiale Längsnut aufweist, in die der radial nach außen weisende Teil eines Abstützwinkels wenigstens teilweise eingreift. Bei dieser Lösung können Lücken zwischen zwei benachbarten Distanzierungsstücken verbleiben.

Die Verklebung erleichtert die Montage und vermeidet die mit der Verschraubung verbundenen Nachteile. Die Verklebung, die beispielsweise mit kalthärtendem Gießharz vorgenommen werden kann, reicht in der Regel aus, um die auftretenden Kräfte zu übertragen.

Anhand der Zeichnung, in der mehrere Ausführungsbeispiele der Erfindung gezeigt sind, sollen die Erfindung sowie weitere Vorteile und Weiterbildungen der Erfindung näher erläutert und beschrieben werden.

Es zeigt:

Fig. 1 die perspektivische Darstellung einer erfindungsgemäßen Anordnung zur Wickelkopfabstützung,

Fig. 2 und 3 Seitenansicht (zum Teil im Schnitt) einer erfindungsgemäßen Wickelkopfabstützung.

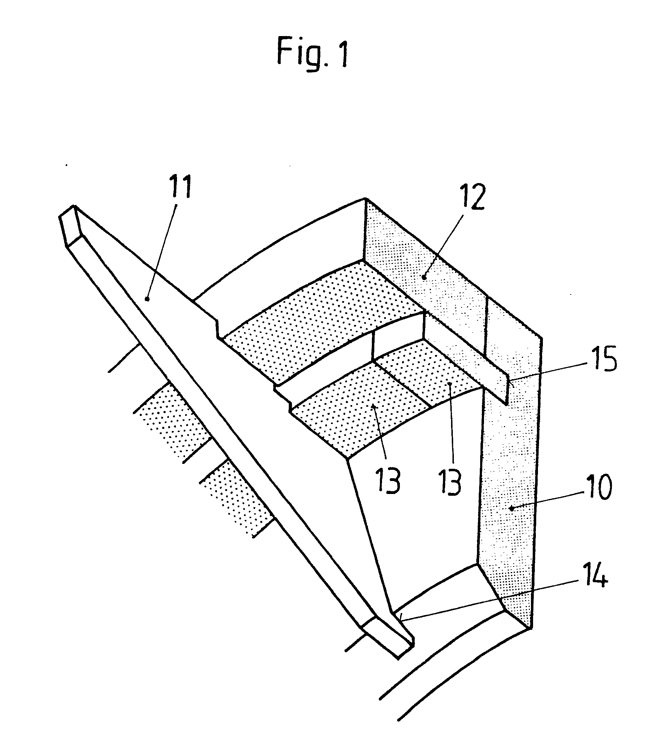

In Figur 1 sind Elemente eines Teilbereiches der Wickelkopfabstützung dargestellt. Es handelt sich dabei um eine Preßplatte 10, die als Preßring oder segmentförmig ausgebildet sein kann, einen Abstützwinkel 11, von denen auf dem gesamten Umfang des Wickelkopfes eine Vielzahl angeordnet sind, einen Abstützring 12 und zwei Teilabschnitte von Distanzierungsstücken 13. Es ist eine Nut 14 in der Preßplatte 10 dargestellt, in die der Abstützwinkel 11 teilweise eingreift. Der Abstützwinkel 11 ist in der Nut 14 in radialer Richtung verschiebbar. Die Distanzierungsstücke 13 liegen teilweise in einer Ringnut 15 der Preßplatte 10.

Die Preßplatte 10 besteht beispielsweise aus Metall, während die Abstützwinkel 11, die Distanzierungsstücke 13 und der Abstützring 12 aus glasfaserverstärktem Kunststoff gefertigt sein können. Abstützwinkel 11, Distanzierungsstücke 13 und Abstützring 12 sind miteinander verklebt. Sie bilden eine Einheit und sind mit den nicht dargestellten Windungen des Wickelkopfes starr verbunden. Die Einheit ist in axialer Richtung nicht fixiert und läßt somit axiale Temperaturausgleichsbewegungen der Statorwicklung zu. Radiale Kräfte des Wickelkopfes werden im wesentlichen durch den Abstützring 12 aufgenommen. Durch die Lagerung der Distanzierungsstücke 13 in der Ringnut 15 erfolgt eine Zentrierung des Wickelkopfes. Tangentiale Kräfte, die auf die Abstützwinkel 11 wirken, werden durch die Lagerung in den Nuten 14 und durch die Distanzierungsstücke 13 aufgenommen.

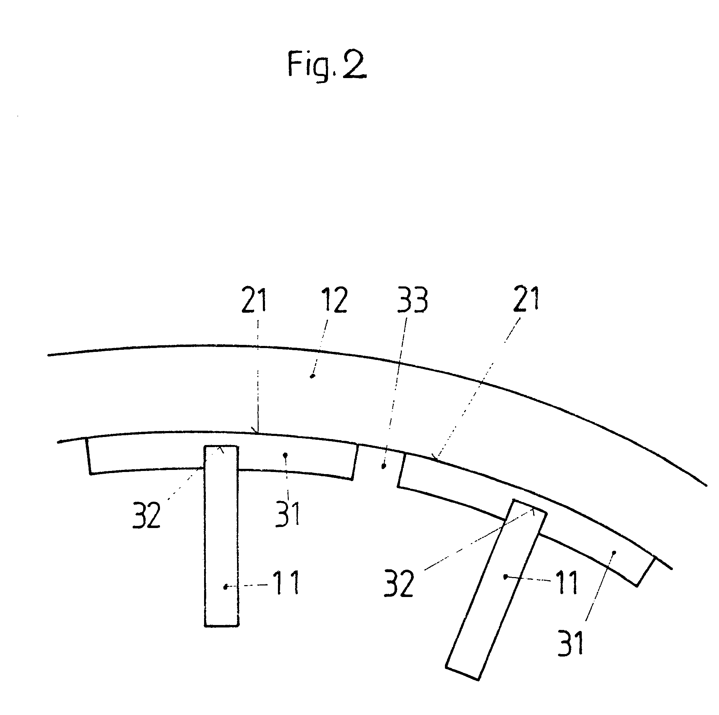

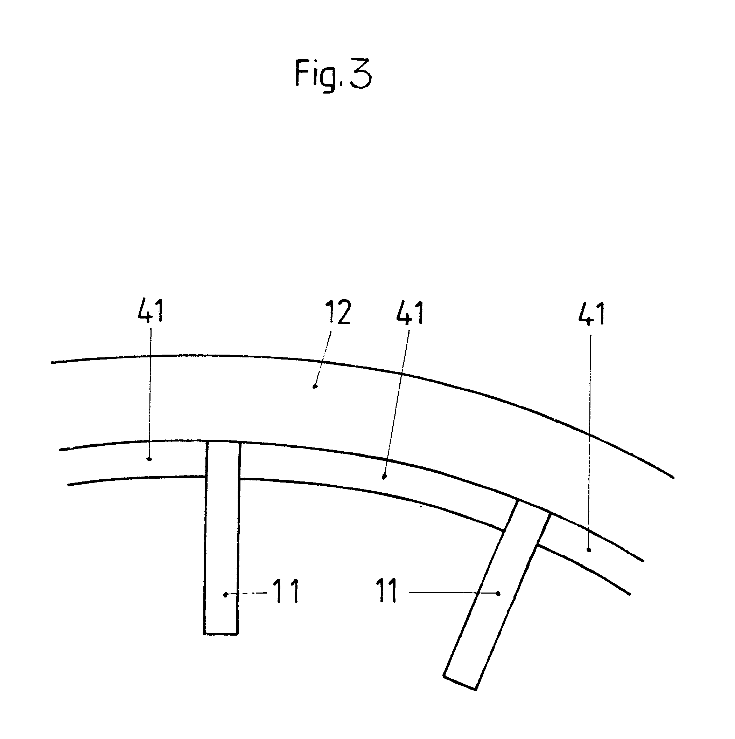

Die Figuren 2 und 3 stellen zwei Varianten für die Ausbildung der segmentringförmigen Distanzierungsstücke dar. Gemäß Figur 2 weisen die Distanzierungsstücke 31 eine zum Krümmungsmittelpunkt gerichtete in axialer Richtung verlaufende Nut 32 auf, in die der jeweilige Abstützwinkel 11 eingreift. Zwischen zwei Distanzierungsstücken 31 befindet sich ein Zwischenraum 33, so daß bei der Fertigung das Problem von Teilungsfehlern nicht auftritt.

Gemäß Figur 3 sind die ringsegmentförmigen Distanzierungsstücke 41 jeweils zwischen zwei benachbarten Abstützwinkeln 11 angeordnet.

## Patentansprüche

1. Anordnung zur Wickelkopfabstützung der Ständerwicklung einer elektrischen Maschine, insbesondere Turbogenerator großer axialer Länge, mit einem durch Preßplatten (10) zusammengehaltenen Blechpaket (24) und mit Leiterstäben (22), die im Wickelkopfbereich sich an einem Abstützring (12) abstützt, der axial unmittelbar an die Preßplatte (10) anschließt, dadurch gekennzeichnet, daß zwischen den Leiterstäben (22) und dem Abstützring (12) Abstützwinkel (11) angeordnet sind mit zwischen sich angeordneten ringsegmentförmigen Distanzierungsstücken (13, 31, 41), die eine tangentiale Auslenkung der Abstützwinkel (11) verhindern, daß der Abstützring (12), die Abstützwinkel (11) und die Distanzierungsstücke (13, 31, 41) jeweils miteinander verklebt sind und so eine bauliche mechanische Einheit bilden, die mit dem Wickelkopf starr verbunden ist, und daß die Preßplatten (10) radial verlaufende Nuten (14) aufweisen, in die die Abstützwinkel (11) teilweise hineinragen, und durch die letztere geführt sind.

2. Anordnung nach Anspruch 1, dadurch gekennzeichnet, daß die Preßplatte (10) eine konzentrisch zur Maschinenachse verlaufende Ringnut (15) aufweist, in die ein Distanzierungsstück (13, 31, 41) wenigstens teilweise hineinragt.

3. Anordnung nach Anspruch 1 oder 2, dadurch gekennzeichnet, daß jeweils ein segmentförmiges Distanzierungsstück (41) zwischen zwei benachbarten Abstützwinkeln (11) angeordnet ist und an beiden Abstützwinkeln (11) anliegt.

4. Anordnung nach Anspruch 1 oder 2, dadurch gekennzeichnet, daß ein ringsegmentförmiges Distanzierungsstück (31) an seiner zur Maschinenachse gerichteten Fläche eine axiale Längsnut (32) aufweist, in die der radial nach außen weisende Teil eines Abstützwinkels (11) wenigstens teilweise eingreift.

5. Anordnung nach einem der vorherigen Ansprüche, dadurch gekennzeichnet, daß der Abstützring (12), die Abstützwinkel (11) und die Distanzierungsstücke (13, 31, 41) aus faserverstärktem Kunststoff gefertigt sind.

## Claims

1. Arrangement for bracing the winding head of the stator winding of an electrical machine, particularly a turbogenerator of great axial length, having stampings (24) held together by pressure plates (10) and having conductor bars (22) which is braced in the region of the winding head against a bracing ring (12) which is directly axially adjacent to the pressure plate (10), characterized in that bracing angles (11) are arranged between the conductor bars (22) and the bracing ring (12) with annular segment-shaped distancing pieces (13, 31, 41) arranged between them which prevent a tangential deviation of the bracing angles (11), in that the bracing ring (12), the bracing angles (11) and the distancing pieces (13, 31, 41) are respectively bonded to each other and thus form a structural mechanical entity which is connected rigidly to the winding head, and in that the pressure plate (10) exhibit radially extending grooves (14) into which the bracing angles (11) partly project and are guided by the latter.

2. Arrangement according to Claim 1, characterized in that the pressure plate (10) exhibits an annular groove (15) extending concentrically to the machine axis, into which a distancing piece (13, 31, 41) projects at least partly.

3. Arrangement according to Claim 1 or 2, characterized in that a segment-shaped distancing piece

(41) is arranged between each two adjacent bracing angles (11) and abuts both bracing angles (11).

4. Arrangement according to Claim 1 or 2, characterized in that an annular segment-shaped distancing piece (31) exhibits on its surface facing the machine axis an axial longitudinal groove (32) into which the radially outward facing part of a bracing angle (11) engages at least partly.

5. Arrangement according to one of the preceding claims, characterized in that the bracing ring (12), the bracing angles (11) and the distancing pieces (13, 31, 41) are produced from fibre-reinforced plastic.

**Revendications**

1. Dispositif pour le support de la tête de bobine de l'enroulement statorique d'une machine électrique, notamment d'un turbo-alternateur d'une grande longueur axiale, comprenant un empilage de tôles (24) maintenu par des plateaux de serrage (10), et des barres conductrices (22), enroulement qui s'appuie, dans la zone de la tête de bobine, sur une bague de support (12) directement contiguë au plateau de serrage (10), caractérisé par le fait qu'entre les barres conductrices (22) et la bague de support (12) sont prévues des équerres de support (11) qui comprennent entre elles des pièces d'écartement (13, 31, 41) en forme de segments d'anneau empêchant une déviation tangentielle des équerres de support (11), que la bague de support (12), les équerres de support (11) et les pièces d'écartement (13, 31, 41) sont collées les unes aux autres et forment ainsi une unité de construction mécanique qui est reliée de façon rigide à la tête de bobine, et que les plateaux de serrage (10) présentent des rainures (14) s'étendant radialement, dans lesquelles pénètrent partiellement les équerres de support (11) et par lesquelles ces dernières sont guidées.

2. Dispositif selon la revendication 1, caractérisé par le fait que le plateau de serrage (10) présente une gorge annulaire (15) concentrique par rapport à l'axe de machine, dans laquelle pénètre au moins partiellement une pièce d'écartement (13, 31, 41).

3. Dispositif selon la revendication 1 ou 2, caractérisé par le fait qu'une pièce d'écartement (41) en forme de segment est disposée entre deux équerres de support (11) voisines et est appliquée contre les deux équerres de support (11).

4. Dispositif selon la revendication 1 ou 2, caractérisé par le fait qu'une pièce d'écartement (31) en forme de segment d'anneau présente sur sa face tournée vers l'axe de machine une rainure longitudinale (32) axiale dans laquelle pénètre au moins partiellement la partie, orientée radialement vers l'extérieur, d'une équerre de support (11).

5. Dispositif selon l'une quelconque des revendications précédentes, caractérisé par le fait que la bague de support (12), les équerres de support (11) et les pièces d'écartement (13, 31, 41) sont fabriquées à partir de matière plastique renforcée par fibres.

# Fig. 1

# Fig. 2

# Fig.3